# EUROPÄISCHE PATENTSCHRIFT

(11) **EP 0 814 321 B1**
(45) Veröffentlichungstag und Bekanntmachung des Hinweises auf die Patenterteilung: **30.01.2002**
(21) Anmeldenummer: 97106258.3
(22) Anmeldetag: 16.04.1997
(51) Int. Cl.: G01D 5/20

(54) **Induktiver Wegsensor**
Inductive displacement sensor
Capteur inductif de déplacement

(30) Priorität: 21.06.1996 DE 19624801
(43) Veröffentlichungstag der Anmeldung: 29.12.1997
(73) Patentinhaber: WABCO GmbH & Co. OHG, 30453 Hannover (DE)
(72) Erfinder: Eden, Gerd, 26524 Hage (DE); Bolte, Heiko, 31632 Husum (DE)
(74) Vertreter: Schrödter, Manfred, Dipl.-Ing.

(56) Entgegenhaltungen:
- DE-A- 3 722 702

## Beschreibung

Die Erfindung bezieht sich auf einen induktiven Wegsensor gemäß dem Oberbegriff des Patentanspruchs 1.

Derartige Wegsensoren dienen zum Erfassen von Wegstrekken, beispielsweise in Maschinen oder Kraftfahrzeugen. Ein gebräuchliches Prinzip hierfür ist der sogenannte Tauchanker-Sensor. Bei diesem wird ein magnetisch leitfähiges Teil (Tauchanker) in eine Spule hineingeschoben. Der Anker ist dabei mit dem Teil, dessen Weg gemessen werden soll, verbunden. Durch den eingeschobenen, meist aus Eisen bestehenden Anker wird die Induktivität der Spule wegabhängig verändert. Diese Induktivitätsänderung wird mit einer geeigneten Elektronik ausgewertet und in einen entsprechenden Weg umgerechnet. Zur Erhöhung der Induktivität und zur Abschirmung des Sensors ist die Spule meistens mit einem magnetisch leitfähigen Gehäuse umschlossen, das insbesondere als Topf ausgebildet sein kann. Um die magnetische Leitfähigkeit des Eisenkreises hoch zu halten, wird der Luftspalt zwischen dem Tauchanker und dem Gehäuse (Joch) möglichst klein gehalten.

Die obengenannte Elektronik zur Auswertung der wegabhängigen Induktivität kann auf verschiedene Weise realisiert werden. Gebräuchlich ist beispielsweise, die Induktivität mit einem Spannungs-Sprung zu beaufschlagen und den sich dadurch ergebenden, ansteigenden Strom bis zu einem Grenzwert zeitlich auszuwerten.

Ein Wegsensor, von dem die Erfindung gattungsgemäß ausgeht, ist beispielsweise aus der DE-A1 38 07 015 bekannt. Aus dieser Schrift ist auch eine elektronische Auswerteschaltung bekannt, mit welcher die veränderliche Induktivität der Spule in einen wegabhängigen Meßwert umgewandelt wird.

Ein grundsätzliches Problem bei allen derartigen Tauchanker-Wegsensoren ist deren Abhängigkeit gegenuber äußeren Störeinflüssen. Hierdurch kann es passieren, daß der Sensor im eingebauten Zustand eine andere Kennlinie aufweist als im ausgebauten Zustand.

Es können drei Arten von Störeinflussen auftreten. Erstens können am Einbauort statische oder wechselnde Magnet-Störfelder auftreten. Zweitens können am Einbauort in der Umgebung des Sensors Eisenteile eingebaut sein, welche das Streufeld eines derartigen Sensors beeinflussen und dessen Meßgenauigkeit damit herabsetzen. Drittens können auch elektrisch leitende Metallteile, die nicht aus Eisen sind, in der Umgebung des Sensors vorhanden sein, welche durch Wirbelstrom-Effekte den (dynamischen) Meßvorgang beeinflussen und ebenfalls die Genauigkeit der Wegmessung herabsetzen.

Der Erfindung liegt die Aufgabe zugrunde, einen gattungsgemäßen Wegsensor derart auszubilden, daß die oben beschriebene Abhängigkeit gegenüber fremden Störeinflüssen ausgeschaltet wird.

Diese Aufgabe wird durch die im Patentanspruch 1 enthaltene Erfindung gelöst. Die Unteransprüche enthalten zweckmäßige Weiterbildungen.

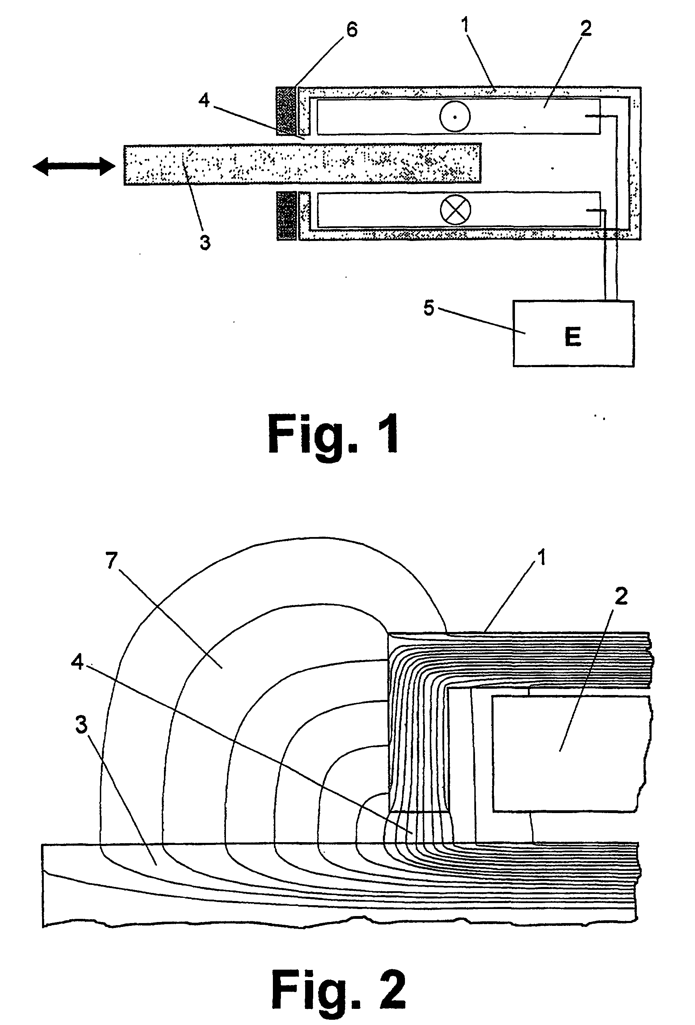

Durch den im Kennzeichen des Patentanspruchs 1 beanspruchten Kurzschlußring wird die Empfindlichkeit gegen Fremdfelder oder gegen außenliegende Eisen- bzw. Metallteile dadurch verringert, daß das Streufeld des Sensors, welches sich durch die dynamische Beaufschlagung der Spule bei der Messung außerhalb des Sensors normalerweise ausbildet (Fig. 2), praktisch abgeschnitten ist. Hierdurch läßt sich ein Sensor realisieren, der unabhängig vom Einbauort immer die gleiche Kennlinie aufweist.

Aus der obengenannten DE-A1 38 07 015 ist zwar bereits ein Kurzschlußring bekannt. Dieser dient jedoch einem anderen Zweck, nämlich der Eliminierung von Temperatureinflüssen auf die Meßgenauigkeit. Er ist deshalb auch nicht, wie beim Erfindungsgegenstand, außerhalb des Gehäuses bzw. vor dem Luftspalt angeordnet und verhindert nicht die Ausbildung eines Streufeldes.

Ein Wegsensor mit einem Kurzschlußring ist auch aus der DD-A1 241 644 bekannt. Auch hier ist jedoch der genannte Kurzschlußring nicht zur Abschirmung gegen äußere Storfelder, sondern zum Abgleich des Sensors vorgesehen. Er ist außerdem im Gehäuse angeordnet.

Schließlich ist aus der DE-37 22 702 A1 ein induktiver Wegaufnehmer bekannt, der eine Spule und einen in den Spuleninnenraum eingreifenden Tauchkern aufweist. Die Spule ist von einem_Topfkern umgeben, an welchem an der einen Seite ein Spulenabschlußteil und an der anderen Seite ein Deckel angefügt sind. Sowohl der Tauchkem als auch der Topfkern, das Spulenabschlußteil und der Deckel sind aus einem magnetisch permeablen Material hergestellt.

Die Erfindung wird im folgenden anhand einer Zeichnung näher erlautert.

Es zeigen:
- Fig. 1: ein Schnittbild des erfindungsgemaßen Wegsensors mit angeschlossener Auswerteelektronik,
- Fig. 2: ein schematisches Bild des Magnetfeldes eines Wegsensors nach dem Stand der Technik, also ohne Kurzschlußring.

Der in der Fig. 1 schematisch dargestellte Wegsensor besteht aus einem magnetisch leitfähigen Gehäuse (1), welches als Topf ausgebildet ist, und eine längliche Spule (2) umschließt. Die Spule (2) kann zur Linearisierung des Ausgangssignals des Sensors noch in einzelne Fächer aufgeteilt sein, die jeweils unterschiedliche Windungszahlen aufweisen (nicht dargestellt). Die Enden der Spule (2) sind an einer Elektronik (5) zur Auswertung der wegabhängigen Induktivität angeschlossen. Die Elektronik (5) gibt zur Messung im allgemeinen einen Spannungssprung auf die Spule und wertet z. B. die Zeitdauer des daraufhin ansteigenden Spulenstroms bis zum Erreichen eines Grenzwertes aus.

Zur Wegmessung dient ein beweglicher Tauchanker (3), der in die Spule einschiebbar ist. Je tiefer der Anker (3) in der Spule (2) eingeschoben ist, desto höher ist die Induktivität der Spule (2). Der magnetische Kreis von Gehäuse (1) und Anker (3) wird uber einen Luftspalt (4) geschlossen.

Unmittelbar vor dem Luftspalt (4), außerhalb des Gehäuses (1) bzw. des magnetischen Kreises ist am Gehäuse (1) ein Kurzschlußring (6) befestigt, der ebenfalls den Anker (3) umschließt.

Der Kurzschlußring (6) ist zweckmäßig aus einem elektrisch gut leitfähigen Material, beispielsweise Kupfer oder Aluminium, hergestellt.

Das Gehäuse (1) sowie der Tauchanker (3) sind zweckmäßig aus einem magnetisch gut leitenden Material hergestellt. Vorzugsweise wird ein hochpermeables Material, beispielsweise RNi5, verwendet. Hierdurch wird der unerwünschte magnetische Streufluß des Sensors, der sich außerhalb des Gehäuses (1) erstreckt, möglichst klein gehalten.

Der Luftspalt (4) ist zweckmäßig möglichst eng ausgebildet.

In der Fig. 2 ist der Streufluß (7), welcher sich ohne den erfindungsgemäßen Kurzschlußring (6) während eines Meßvorgangs ergeben würde, schematisch dargestellt. Man sieht, daß, insbesondere verursacht durch den hohen magnetischen Widerstand des Luftspaltes (4), die magnetischen Feldlinien aus dem Gehäuse (1) austreten und bogenförmig außerhalb des Sensors zum Tauchanker (3) gehen.

Im Zusammenhang mit der Erfindung wurde festgestellt, daß dieser außerhalb des Sensors befindliche Streufluß (7) die Hauptursache für die oben beschriebene Störanfälligkeit der bekannten Wegsensoren nach dem Tauch-ankerprinzip gegenüber außeren magnetischen Einflüssen ist. Das Streufeld, dessen magnetische Feldlinien mit (7) bezeichnet sind, wird namlich durch außere störende Fremdmagnetfelder oder auch durch Metallteile, insbesondere Eisenteile, beeinflußt, wodurch die Meßgenauigkeit und der Verlauf der Kennlinie eines Sensors nach dem Stand der Technik von dessen Einbauort abhängig ist.

Durch den erfindungsgemäß angeordneten Kurzschlußring gemäß Fig. 1 wird nun das Streufeld nach der Fig. 2 nahezu eliminiert. Die im Tauchanker (3) befindlichen Magnetfeldlinien werden praktisch unmittelbar vor dem Luftspalt (4) "abgeschnitten". Dieses geschieht deshalb, weil der während einer Messung im Kurzschlußring (6) induzierte Strom ein Magnetfeld erzeugt, welches dem ursächlichem Magnetfeld im Anker entgegengerichtet ist und dadurch ein Austreten des Feldes aus dem Sensor weitestgehend unterdrückt (Fig. 1).

Die erfindungsgemaße Methode läßt sich bei allen Tauchanker-Wegsensoren, sowie auch bei anderen magnetischen Sensoren, deren veränderliche Induktivität durch eine Anregung mit einem veränderlichen Strom auswertbar ist, anwenden.

Unmittelbar vor dem Luftspalt (4), außerhalb des Gehäuses (1) bzw. des magnetischen Kreises ist am Gehäuse (1) ein Kurzschlußring (6) befestigt, der ebenfalls den Anker (3) umschließt.

Der Kurzschlußring (6) ist zweckmäßig aus einem elektrisch gut leitfähigen Material, beispielsweise Kupfer oder Aluminium, hergestellt.

Das Gehäuse (1) sowie der Tauchanker (3) sind zweckmäßig aus einem magnetisch gut leitenden Material hergestellt. Vorzugsweise wird ein hochpermeables Matcial, beispielsweise RNi5, verwendet. Hierdurch wird der unerwünschte magnetische Streufluß des Sensors, der sich außerhalb des Gehäuses (1) erstreckt, möglichst klein gehalten.

Der Luftspalt (4) ist zweckmäßig möglichst eng ausgebildet.

In der Fig. 2 ist der Streufluß (7), welcher sich ohne den erfindungsgemäßen Kurzschlußring (6) während eines Meßvorgangs ergeben würde, schematisch dargestellt. Man sieht, daß, insbesondere verursacht durch den hohen magnetischen Widerstand des Luftspaltes (4), die magnetischen Feldlinien aus dem Gehäuse (1) austreten und bogenförmig außerhalb des Sensors zum Tauchanker (3) gehen.

Im Zusammenhang mit der Erfindung wurde festgestellt, daß dieser außerhalb des Sensors befindliche Streufluß (7) die Hauptursache für die oben beschriebene Storanfälligkeit der bekannten Wegsensoren nach dem Tauch-ankerprinzip gegenüber äußeren magnetischen Einflüssen ist. Das Streufeld, dessen magnetische Feldlinien mit (7) bezeichnet sind, wird nämlich durch äußere störende Fremdmagnetfelder oder auch durch Metallteile, insbesondere Eisenteile, beeinflußt, wodurch die Meßgenauigkeit und der Verlauf der Kennlinie eines Sensors nach dem Stand der Technik von dessen Einbauort abhängig ist.

Durch den erfindungsgemäß angeordneten Kurzschlußring gemäß Fig. 1 wird nun das Streufeld nach der Fig. 2 nahezu eliminiert. Die im Tauchanker (3) befindlichen Magnetfeldlinien werden praktisch unmittelbar vor dem Luftspalt (4) "abgeschnitten". Dieses geschieht deshalb, weil der während einer Messung im Kurzschlußring (6) induzierte Strom ein Magnetfeld erzeugt, welches dem ursächlichem Magnetfeld im Anker entgegengerichtet ist und dadurch ein Austreten des Feldes aus dem Sensor weitestgehend unterdrückt (Fig. 1).

Die erfindungsgemäße Methode läßt sich bei allen Tauchanker-Wegsensoren, sowie auch bei anderen magnetischen Sensoren, deren veränderliche Induktivität durch eine Anregung mit einem veränderlichen Strom auswerthar ist, anwenden.

## Patentansprüche

1. Induktiver Wegsensor mit einem magnetisch leitfahigem Gehäuse (1), einer innerhalb des Gehäuses (1) angeordneten Spule (2), und einem in das Gehäuse (1) und die Spule (2) einschiebbaren Tauchanker (3), welcher mit dem Gehause (1) einen ringförmigen Luftspalt (4) bildet, und wobei zur Wegsensierung die wegabhängige Induktivität der Spule (2) mittels einer angeschlossenen Elektronik (5) durch einen dynamischen Meßvorgang auswertbar ist, **dadurch gekennzeichnet, daß** außerhalb des Gehäuses (1), unmittelbar vor dem Luftspalt (4), ein den Tauchanker (3) umschließender Kurzschlußring (6) angeordnet ist, und daß der Kurzschlußring (6) aus einem elektrisch gut leitfähigen, nichtferromagnetischen Material besteht.

2. Wegsensor nach Anspruch 1, **dadurch gekennzeichnet, daß** für das Gehäuse (1) und/oder den Tauchanker (3) ein hochpermeables Material verwendet wird.

## Claims

1. An inductive displacement sensor having a magnetically permeable housing (1), a coil (2) arranged inside the housing (1), and a plunger-type armature (3) which is insertable in the housing (1) and the coil (2), the plunger-type armature forming with the housing (1) an annular air gap (4), and wherein, to detect displacement, the displacement-dependent inductance of the coil (2) is arranged to be evaluated by means of connected electronics (5) by a dynamic measuring process, **characterised in that** outside the housing (1), directly in front of the air gap (4), there is arranged a short circuit ring (6) surrounding the plunger-type armature (3), and wherein the short circuit ring (6) consists of a non-ferromagnetic material having good electrical conductivity properties.

2. A displacement sensor according to claim 1, **characterised in that** a high-permeability material is used for the housing (1) and/or the plunger-type armature (3).

## Revendications

1. Capteur inductif de déplacement comportant un boîtier magnétiquement conducteur (1), une bobine (2) disposée à l'intérieur du boîtier (1), et un noyau plongeur (3), qui peut inseré dans le boîtier (1) et dans la bobine (2) et qui forme avec le boîtier (1) un entrefer de forme annulaire (4), et dans lequel pour la détection d'un déplacement, l'inductivité de la bobine (2), qui dépend du déplacement, peut être évaluée au moyen d'un système électronique raccordé (5), au moyen d'un processus de mesure dynamique, **caractérisé en se que** une bague de court-circuit (6), qui entoure le noyau plongeur (3), est disposé à l'extérieur du boîtier (1), directement devant l'entrefer (4), la bague de court-circuit (6) étant réalisée en un matériau non ferromagnétique, qui est bon conducteur de l'électricité.

2. Capteur de déplacement selon la revendication. 1, **caractérisée en ce que** pour le boîtier (1) et/ou le noyau plongeur (3), on utilise un matériau hautement perméable.
